# EUROPEAN PATENT SPECIFICATION

(11) **EP 3 790 174 B1**
(45) Date of publication and mention of the grant of the patent: **28.10.2026**
(21) Application number: 20194000.4
(22) Date of filing: 02.09.2020
(51) Int. Cl.: H02K 11/25, H02K 5/22, H02K 15/50

(54) **STATOR OF AN ELECTRICAL MACHINE WITH REMOVABLE TEMPERATURE SENSOR**
STATOR EINER ELEKTRISCHEN MACHINE MIT ENTNEHMBAREM TEMPERATURSENSOR
STATOR D'UNE MACHINE ÉLÉCTRIQUE AVEC CAPTEUR DE TEMPÉRATURE AMOVIBLE

(30) Priority: 06.09.2019 DK PA201970556
(43) Date of publication of application: 10.03.2021
(73) Proprietor: VESTAS WIND SYSTEMS A/S, 8200 Aarhus N (DK)
(72) Inventor: MEINEKAT, Ulrich, 23701 Eutin (DE)
(74) Representative: Vestas Patents Department

(56) References cited:
- EP-A1- 0 993 099
- EP-A1- 3 182 564
- WO-A2-2009/003478

## Description

### FIELD OF THE INVENTION

The present invention relates to the field of external temperature sensor assembly, more specifically to the field of temperature sensing within an electrical machine e.g. an electrical generator of a wind turbine. The invention provides a method and a device for mounting a temperature sensing arrangement for monitoring of a stator winding temperature in an electrical machine from the outside of a machine housing comprising an electrical generator.

### BACKGROUND

For e.g. high power rotating electric machinery, such as motors or generators, sensing of temperature of stator windings is important for safe operation. Within the area of temperature sensor assemblies, it is a known problem that temperature sensors inside an electric machine with time show sign of not being fully functional or even broken. When a temperature sensor inside the machine potentially stops functioning, it is not possible to repair or replace the sensor. One solution is to install a number of temperature sensors at the same place for sensing the same temperature spot within the stator of the electrical machine. The need to have as minimum two sensors at the same spot several different places within the electrical machine, makes the cost unnecessarily high, the temperature sensors take more place, and it necessitates extra external equipment, such as electric cables and monitoring boxes for receiving the data from the temperature sensors, thereby also an unnecessarily extra cost and use of space for such equipment.

EP0993099 A1 disclosed the stator winding includes a device for monitoring the temperature of the winding. A receptacle is provided for insertion of a temperature sensor. The receptacle is thermally connected to the winding. The receptacle may be tube or pot shaped and made of electrically insulating material. The receptacle may be fixed in the region of the ends of the winding which extend over the laminated core.

EP3182564 A1 discloses an electric machine assembly comprising an electric machine having a stator and a rotor rotatable about an axis; and at least one detecting device housed inside the stator and comprising a magnetic probe for measuring a magnetic induction value of the electric machine, and a temperature probe for measuring a temperature value of the electric machine.

However, an improved method and assembly for sensing temperature inside an electrical machine and potentially repair or replace the temperature sensors from the outside of the electrical machine housing would be advantageous, and in particular, a more efficient, reliable and low-cost temperature sensor system would be advantageous.

### OBJECT OF THE INVENTION

In particular, it may be seen as an object of the present invention to provide an improved method and assembly for sensing temperature inside an electrical machine and potentially repair or replace the temperature sensors from the outside of the electrical machine housing that may yield the mentioned advantages with respect to prior art temperature sensing methods and assemblies, such as being more reliable, efficient and/or low-cost.

It is a further object of the present invention to provide an alternative to the prior art.

### SUMMARY

Thus, the above described object and several other objects are intended to be obtained in a first aspect of the invention by providing an electrical machine comprising;
- a stator (ST) with a stacks of lamination sheets and a stator winding arrangement comprising stator windings (SW) with cooling slots (CS) in the stacks of lamination sheets,
- a rotor (RO) arranged for rotation inside the stator,
- a machine housing (MH) for housing the stator,
- at least one temperature sensor arrangement comprising:
   - a temperature sensor (TS) with a sensor-end (SE) and a wire-end (WE), and
   - an immersion sleeve (IS),

   wherein an insertion angle of the temperature sensor arrangement through the machine housing (MH) is perpendicular to or approximately perpendicular to an axis of rotation of the rotor (RO), and
   wherein the sensor-end of the temperature sensor is inserted in the immersion sleeve and through an insertion bore (IB) arranged in an opening in the machine housing, so that the sensor-end of the temperature sensor is positioned within one of the cooling slots, so as to allow sensing of a temperature of measure of temperature of the stator windings by electric connection to the wire-end of the temperature sensor, and
   wherein the stator has radial cooling slots between the stacks of lamination sheets, and wherein the temperature sensor has a length, with the sensor-end positioned at a bottom part of one of these cooling slots nearest the radial center of the machine, while the wire-end is positioned outside the machine housing,
   wherein the radial end of the cooling slot nearest the center of the machine is blocked by a suitable material, so as to prevent the sensor-end to be cooled by cooling fluid, when positioned in the bottom part of the cooling slot.

The invention may be particularly, but not exclusively, advantageous for obtaining a more efficient and optimal system, as the temperature sensors placed within an electrical machine is now accessible from the outside of the machine housing, as the sensors is inserted through an insertion bore and thereby no longer inaccessible and hidden inside the machine, but very easily to access if needed.

Furthermore, the invention may also be particularly, but not exclusively, advantageous for obtaining a more reliable system, as the accessibility of the temperature sensors makes it possible to repair or replaced the sensors if any of the sensors shows any signs for not being functional. The sensors can without any trouble and without any specific tools be taken out of the electrical machine and thereby being fixed from the outside of the machine housing. This eliminates the need for mounting extra temperature sensors inside the machine, and thus the extra sensor itself can be eliminated as well as the need for extra cables and further equipment such as monitoring boxes for connecting the temperature sensors.

In an embodiment an electrical machine is provided, comprising an external terminal monitoring box connectable at the wire-end of the temperature sensor, so as to allow an electric communication between the temperature sensor and the external monitoring box, and so as to allow monitoring of the temperature inside the stator windings from the outside of the machine housing.

The invention may be particularly, but not exclusively, advantageous for obtaining a reliable system, as the temperature sensed inside the electrical machine in a very easy and simple way is communicated to the outside of the housing, so as the temperature is easily controllable for the person, who monitor the internal temperature of the electrical machine.

In an embodiment there is provided electrical machine, wherein the at least one temperature sensor arrangement is arranged for the temperature sensor being replaced from the outside of the machine housing.

The invention may be particularly, but not exclusively, advantageous for obtaining a low-cost, as the temperature sensors with this invention can potentially be repaired if they show any signs of not being functional. The repair can be performed outside the generator housing. If the sensor can not be repaired, a new temperature sensor can be inserted instead through the same insertion bore without any specific tools.

Furthermore, the invention may be particularly, but not exclusively, advantageous for obtaining a low-cost temperature sensing system, as the temperature sensors are accessible. The system used today, force a need of installing two temperature sensors for any spot inside the stator where temperature sensing is needed. If one of the sensors are not functional, the other will take over the temperature sensing. The need of having a double temperature sensing arrangement makes the installation cost at least double as high, as when only one temperature sensor per spot is needed.

Furthermore, the invention may be particularly, but not exclusively, advantageous for obtaining a more space-optimal temperature sensing arrangement, as the space needed for one temperature sensor is less than the space needed for two. This means that important space for extra cables and monitoring boxes etc. can be saved in the tight space of the nacelle of a wind turbine.

In an embodiment an electrical machine is provided, the electrical machine comprising a plurality of temperature sensor arrangements inserted into respective openings of the machine housing.

The invention may be particularly, but not exclusively, advantageous for obtaining a very easy accessibility to the temperature sensors. The sensors thereby being able to be repaired or replaced if they show signs for not being functional or broken.

Furthermore, the invention may be particularly, but not exclusively, advantageous for obtaining a very reliable temperature sensing system, as not only one spot inside the electrical machine is temperature sensed, but several different spots inside the electrical machine potentially can be sensed and controlled.

Furthermore, the invention may be particularly, but not exclusively, advantageous for obtaining a choice of how many spots inside the electrical machine that is optimal for being temperature sensed and thereby making a reliable system.

In an embodiment an electrical machine is provided, wherein a plurality of temperature sensors or respective temperature sensor arrangements are connected to one single external terminal monitoring box. Thus, several positions inside the stator can be covered by means of one single external terminal monitoring box.

The invention may be particularly, but not exclusively, advantageous for obtaining a low-cost temperature sensing system, as the present system of sensing temperatures inside an electrical machine has a need of double set of temperature sensors. The double set of temperature sensors makes a need of also having a double up of external monitoring boxes. E.g. there may be a need of minimum two external monitoring boxes to monitor the temperature sensed inside the electrical machine at three different positions, thus using six temperature sensors. This invention eliminates the need of double temperature sensor arrangement and thereby also eliminate the need of two monitoring boxes. Now only a single external monitoring is necessary to monitor all the sensed temperature spots inside the machine and thereby the cost will decrease.

In an embodiment there is provided an electrical machine, wherein the at least one temperature sensor arrangement is length extended. This may be done by the use of at least one bearing sensor. Especially, the length is extended to provide a distance of such as at least 10 cm between the senor-end and the wire-end of the temperature sensor. This allow the use of a small sensor, and still allow the sensor to be inserted into the immersion sleeve.

The invention may be particularly, but not exclusively, advantageous for obtaining a more conformable temperature sensing system as the length of the temperature sensors are variable and can with the bearing sensors being length extended so as they fit exactly with the system it is installed in.

In an embodiment there is provided an electrical machine, wherein the at least one temperature sensor is a resistance temperature detector type sensor.

The invention may be particularly, but not exclusively, advantageous for obtaining a reliable system. The resistance temperature detector type sensor is in the present temperature sensing system very functional and reliable. Therefore, the possibility of using the resistance temperature detector type sensor within the new system, makes the invention even more reliable. For example, a sensor type as the well-known pt 100 may be used.

In an embodiment, an electrical machine is provided, wherein the immersion sleeve is made of a polymeric material.

The invention may be particularly, but not exclusively, advantageous for obtaining a very durable and lasting system. Polymeric material has extremely great lifetime, as it is very rugged.

Furthermore, the invention may be particularly, but not exclusively, advantageous for obtaining an easy production of the immersion sleeve. The material is easy to form in any given shape. Therefor the polymeric material makes it possible to change the shape of the immersion sleeve, if needed.

In an embodiment there is provided an electrical machine, wherein the immersion sleeve is glued into the opening of the machine housing.

The invention may be particularly, but not exclusively, advantageous for obtaining an easy installation of the immersion sleeve and furthermore an easy replacement, as there is no need for any specific tools.

In an embodiment, an electrical machine is provided, wherein the insertion angle of the temperature sensor arrangement through the machine housing is perpendicular to or approximately perpendicular to the axis of rotation of the rotor.

The stator has radial cooling slots between stacks of lamination sheets, and wherein the temperature sensor has a length, so as to allow the sensor-end to be positioned at a bottom part of the cooling slot, while the wire-end is positioned outside the machine housing. By 'bottom part of the cooling slot' is understood the part of the cooling slot near the center of the machine, i.e. the 20% part of the total length of the cooling slot nearest the center of the machine. Preferably, an end of the cooling slot nearest the center of the machine is blocked by a suitable material, so as to prevent the sensor-end to be cooled by cooling fluid, when positioned in the bottom part of the cooling slot

The invention may be particularly, but not exclusively, advantageous for obtaining an easy conformable installation inside the insertion bore, as the insertion length can be made in any wanted dimensions, fitting to the temperature sensing system.

In an embodiment there is provided an electrical machine, wherein the insertion opening of the machine housing is an insertion bore, wherein a bushing is inserted, the insertion bore having a diameter between 1 mm and 30 mm.

The invention may be particularly, but not exclusively, advantageous for obtaining an easily installation of the inside of the insertion bore, as a bushing is easily to install, replace and exchange if necessary.

Furthermore, the invention may be particularly, but not exclusively, advantageous for obtaining an easy conformable installation inside the insertion bore, as the insertion bore potentially can be made in any wanted dimensions and shapes, e.g. circular, rectangular or any other shape, fitting to the inserted device, the device preferably being a bushing.

In an embodiment an electrical is provided, wherein the electrical machine is an electrical generator. Especially, the generator may be capable of producing an electric power of at least 1 MW, such as 2 MW, such as 3 MW, such as 4 MW, such as 5 MW, such as 10 MW, or more.

In a second aspect, there is provided a wind turbine comprising an electrical generator, according to the first aspect.

In a third aspect, the invention relates to use of an assembly for sensing temperature inside an electrical machine and potentially repair or replace the temperature sensors from outside the electrical machine housing.

This aspect of the invention may be particularly, but not exclusively, advantageous for obtaining a more efficient and optimal system, as the temperature sensors placed within an electrical machine is now accessible from the outside of the machine housing, as the sensors is inserted through an insertion bore and thereby no longer inaccessible and hidden inside the machine, but very easily to access.

Furthermore, the invention may also be particularly, but not exclusively, advantageous for obtaining a more reliable system, as the accessibility of the temperature sensors makes it possible to repair or replaced the sensors if any of the sensors shows any signs for not being functional. The sensors can without any trouble and any specific tools be taken out of the electrical machine and the corresponding machine housing and thereby being fixed outside the machine housing.

In a fourth aspect, the invention relates to a method for mounting a temperature sensor for monitoring of a stator winding temperature of an electrical machine from outside a machine housing around the stator, the method comprising:
- providing a temperature sensor with a sensor-end and a wire-end,
- providing an opening of the machine housing from an external surface of the housing and into one of the cooling slots,
- inserting an immersion sleeve into the opening of the electrical machine housing, into the cooling slot of the stator windings,
- mounting an insertion bore on an external surface of the electrical machine housing aligned with the opening of the electrical machine housing, and
- inserting the temperature sensor from outside the machine housing into the immersion sleeve via the insertion bore with an insertion angle of the temperature sensor through the machine housing (MH) perpendicular to or approximately perpendicular to an axis of rotation of the rotor (RO), so that the sensor-end is positioned in the cooling slot of the stator windings.

The first, second, third and fourth aspects of the present invention may each be combined with any of the other aspects. These and other aspects of the invention will be apparent from and elucidated with reference to the embodiments described hereinafter.

### BRIEF DESCRIPTION OF THE FIGURES

The invention will now be described in more detail with regard to the accompanying figures of which
FIG. 1 illustrates a wind turbine in which the temperature sensing method and device is advantageously applied,
FIG. 2 illustrates an overview of a machine housing,
FIG. 3 illustrates a section of an electric machine with the temperature sensor positioned in a radial cooling slot of the stator,
FIG. 4 illustrates a temperature sensor,
FIG. 5 illustrates two cross sections of an immersion sleeve,
FIG. 6 illustrates two separate parts of an immersion sleeve and a collected immersion sleeve,
FIG. 7 illustrates an insertion of an immersions sleeve in an insertion bore,
FIG. 8 illustrates the inside of a stator with a stator winding arrangement comprising stator windings with cooling slots,
FIG. 9 illustrates the communication system of a sensed temperature, and
FIG. 10 illustrates steps of a flow-chart of a method according to the invention.

The figures show specific ways of implementing the present invention and is not to be construed as being limiting to other possible embodiments falling within the scope of the attached claim set.

The temperature sensor device and method according to the invention will now be described in more detail with regard to the accompanying figures.

### DETAILED DESCRIPTION OF AN EMBODIMENT

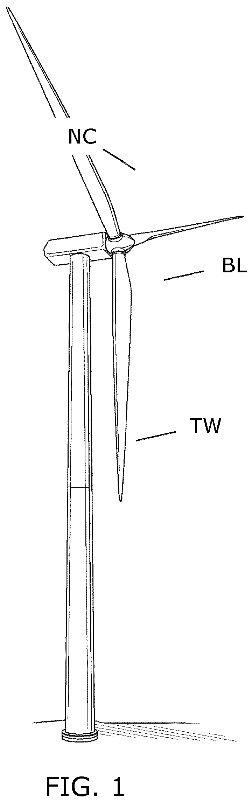

FIG. 1 shows a wind turbine WT with three rotor blades BL for driving a shaft of an electric power generator located inside the nacelle NC on top of a tower TW. The invention, i.e. the temperature sensing arrangement for an electric machine, is advantageous for use in such wind turbine WT, namely for providing a reliable and easily repairable temperature sensing system for stator windings of the electric power generator.

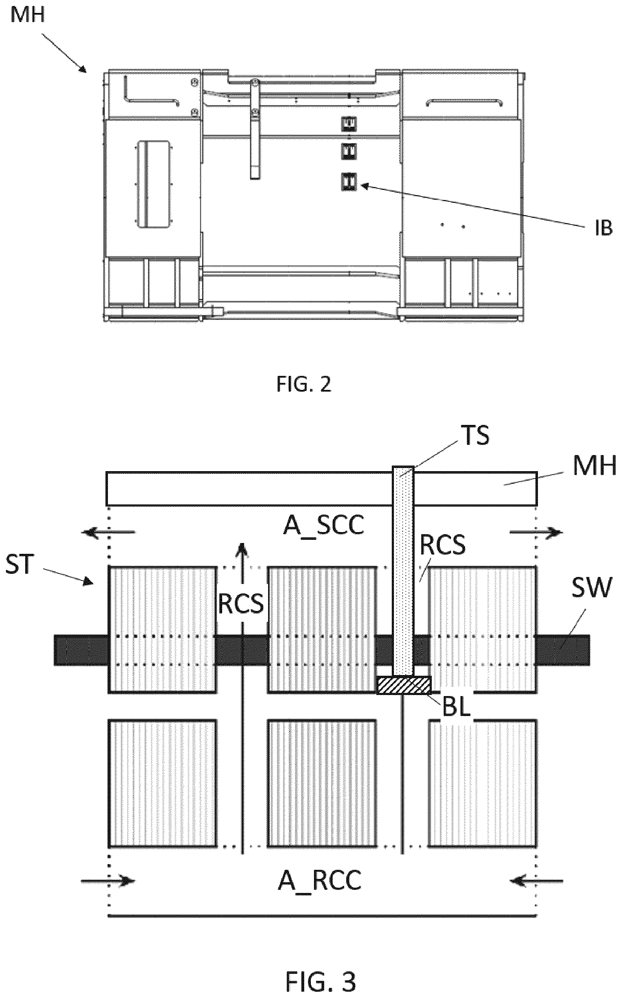

FIG. 2 shows an example of a machine housing, housing an electrical generator, where three insertion openings of the machine housing MH is provided with insertion bores IB. The insertion bores IB might be placed in any suitable location of the machine housing, e.g. to allow perpendicular insertion of the temperature sensor to reach the desired position in a cooling slot of the stator, perpendicular insertion direction is understood as being the same direction as radial to the rotor axis. The insertion opening allowing an at least one temperature sensor TS to be arranged for being replaced from the outside of the machine housing MH.

FIG. 3 shows a section of an electric machine embodiment, e.g. an electric generator for a wind turbine, where the stator ST has radial cooling slots RCS between stacks of lamination sheets to cool the stator windings SW. The radial cooling slots RCS connect to an axial stator cooling channel A_SCC and an axial rotor cooling channels A_RCC. The temperature sensor TS is shown to be positioned in one of these radial cooling slots RCS and having a length, so as to allow the sensor-end to be positioned at a bottom part of one of these radial cooling slots RCS nearest a center of the machine, while the wire-end is positioned outside the machine housing MH. It is further shown that an end of the cooling slot RCS nearest the center of the machine is blocked by a suitable material BL, so as to prevent the sensor-end of the temperature sensor TS to be cooled by cooling fluid, when positioned in the bottom part of the radial cooling slot RCS.

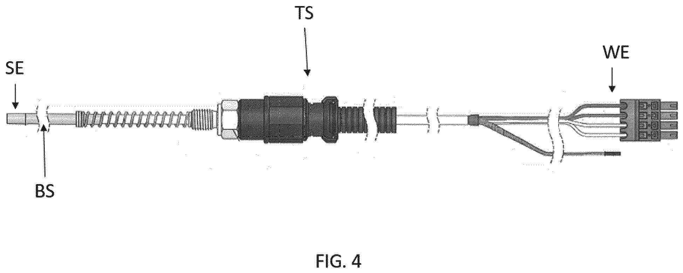

FIG. 4 shows an example of a temperature sensor TS with a sensor-end SE and a wire-end WE. The temperature sensor can potentially be length extended by the use of a bearing sensor BS. The temperature sensor TS is preferably a resistance temperature detector type sensor, e.g. such as a pt 100 sensor.

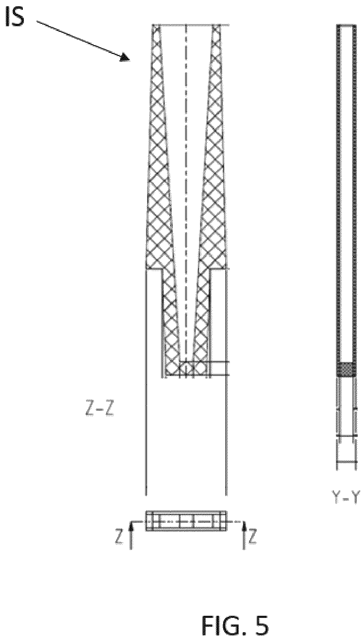

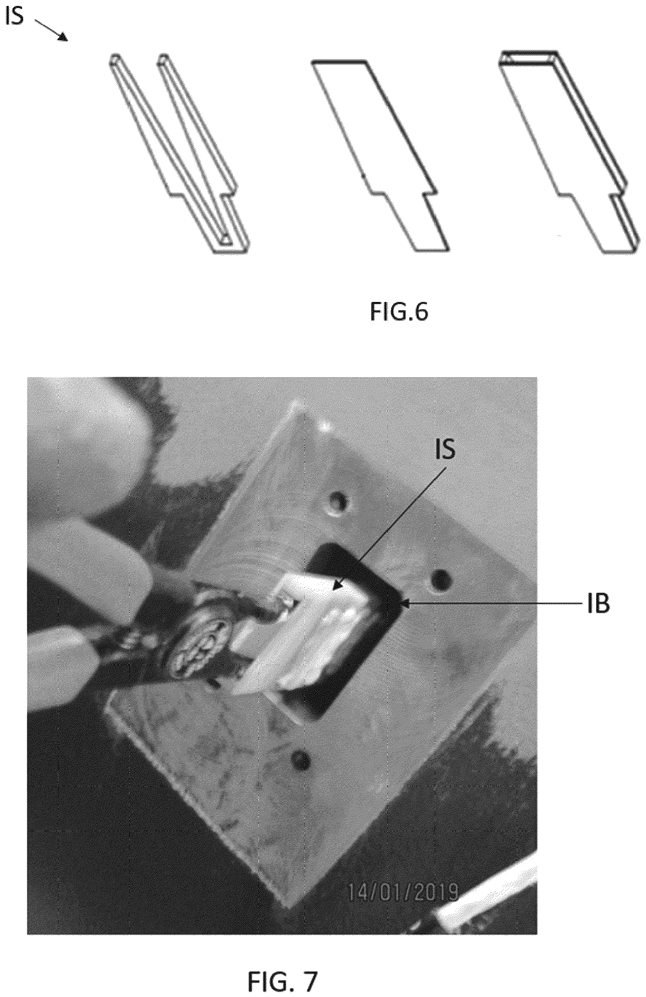

FIGs. 5 and 6 show an example of an immersion sleeve IS. FIG. 5 shows two cross sections of the immersion sleeve IS, and FIG. 6 shows two separate parts of the immersion sleeve (to the left) and an assembled immersion sleeve (to the right). The immersion sleeve IS is preferably made of a polymeric material.

FIG. 7 shows an insertion of an immersions sleeve IS in an insertion bore IB through a machine housing MH. The insertion bore IB having a suitable diameter for inserting the temperature sensor in the immersion sleeve IS. The insertion bore IB potentially being a bushing arranged in the opening of the machine housing. The immersion sleeve IS is in the figure illustrated as being glued into the bushing. It is important to use the radial cooling slot for the insert of the immersions sleeve. Making a bore in the stator lamination by mechanical tooling, will cause magnetic short circuits in the lamination, thus it is important to use radial openings in the stator lamination, such as the radial cooling slots.

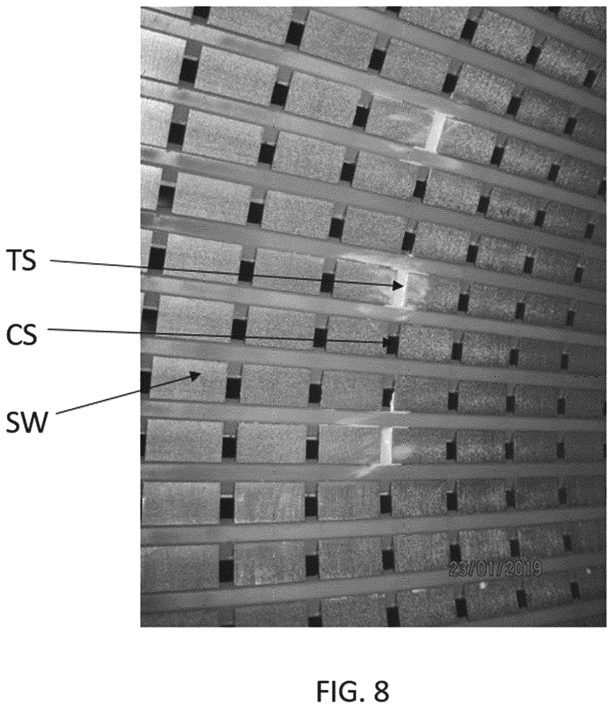

FIG. 8 illustrates the inside of a stator with a stator winding arrangement comprising stator windings SW with cooling slots CS. Between the cooling slots CS is at least one, preferably a plurality of, temperature sensor TS arrangements arranged for sensing the temperature inside the stator windings, since the cooling slot CS temperature can be used as an indirect measure of temperature of the stator windings.

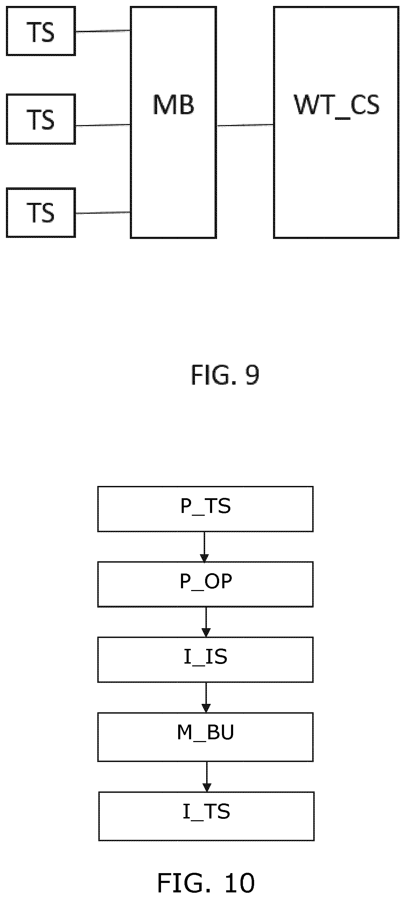

FIG. 9 shows an embodiment with three temperature sensors TS and respective temperature sensor arrangements are connected to one single external terminal monitoring box MB. The monitoring box is connected to a wind turbine control system WT_CS, which controls the overall and general system of the wind turbine. The external terminal monitoring box MB is connectable at the wire-end of the temperature sensor TS, so as to allow an electric communication between the temperature sensor and the external monitoring box, and so as to allow monitoring of the temperature inside the stator windings SW from the outside of the machine housing MH. The wind turbine control system WT_CS can thus monitor temperature of the stator windings of the electric generator and generate an alarm or determine to shut-down in case predetermined temperature thresholds are exceeded. The wind turbine control system WT_CS may further generate an alarm that one of the temperature sensors TS is out of function and thus needs to be replaced or repaired.

FIG. 10 illustrates steps of a flow-chart of a method according to the invention. The method for mounting a temperature sensor TS for monitoring of a stator winding SW temperature of an electrical machine EM from outside a machine housing MH around the stator ST, the method comprising:
- providing a temperature sensor P_TS with a sensor-end and a wire-end,
- providing an opening P_OP of the machine housing from an external surface of the housing and into a cooling slot CS of the stator windings,
- inserting an immersion sleeve I_IS into the opening of the electrical machine housing, into the cooling slot of the stator windings,
- mounting a bushing M_BU on an external surface of the electrical machine housing aligned with the opening of the electrical machine housing, and
- inserting the temperature sensor I_TS from outside the machine housing into the immersion sleeve via the bushing, so that the sensor-end is positioned in the cooling slot of the stator windings.

To sum up, the invention provides an electrical machine comprising a stator with a stator winding arrangement, a rotor arranged for rotation inside the stator, a machine housing for housing the stator, at least one temperature sensor arrangement and wherein a sensor-end of the temperature sensor is arranged for insertion into the immersion sleeve and for insertion through an insertion bore arranged in an opening in the machine housing, so that the sensor-end of the temperature sensor is positioned within a cooling slot of the stator windings, when inserted, so as to allow sensing of a temperature of measure of temperature of the stator windings by electric connection to the wire-end of the temperature sensor.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An electrical machine (EM) comprising;
- a stator (ST) withstacks of lamination sheets and a stator winding arrangement comprising stator windings (SW) with cooling slots (CS) in the stacks of lamination sheets,
- a rotor (RO) arranged for rotation inside the stator,
- a machine housing (MH) for housing the stator,
- at least one temperature sensor arrangement comprising:
- a temperature sensor (TS) with a sensor-end (SE) and a wire-end (WE), and
- an immersion sleeve (IS),
wherein an insertion angle of the temperature sensor arrangement through the machine housing (MH) is perpendicular to or approximately perpendicular to an axis of rotation of the rotor (RO), and
wherein the sensor-end of the temperature sensor is inserted in the immersion sleeve and through an insertion bore (IB) arranged in an opening in the machine housing, so that the sensor-end of the temperature sensor is positioned within one of the cooling slots, so as to allow sensing of a temperature or measure of temperature of the stator windings by electric connection to the wire-end of the temperature sensor, and
**characterized in that** the stator has radial cooling slots (RCS) between the stacks of lamination sheets, and wherein the temperature sensor has a length, with the sensor-end positioned at a bottom part of one of these cooling slots nearest the radial center of the machine, while the wire-end is positioned outside the machine housing,
wherein the radial end of the cooling slot nearest the center of the machine is blocked by a suitable material (BL), so as to prevent the sensor-end to be cooled by cooling fluid, when positioned in the bottom part of the cooling slot.

2. The electrical machine (EM) according to claim 1, comprising an external terminal monitoring box (MB) connectable at the wire-end (WE) of the temperature sensor (TS), so as to allow an electric communication between the temperature sensor and the external monitoring box, and so as to allow monitoring of the temperature inside the stator windings (SW) from the outside of the machine housing (MH).

3. The electrical machine (EM) according to claim 1 and 2, wherein the at least one temperature sensor (TS) arrangement is arranged for the temperature sensor being replaced from the outside of the machine housing (MH).

4. The electrical machine (EM) according to any of the preceding claims, comprising a plurality of temperature sensor arrangements inserted into respective openings of the machine housing (MH).

5. The electrical machine (EM) according to any of the preceding claims, wherein a plurality of temperature sensors (TS) or respective temperature sensor arrangements are connected to one single external terminal monitoring box (MB).

6. The electrical machine (EM) according to any of the preceding, wherein the at least one temperature sensor (TS) is a resistance temperature detector type sensor.

7. The electrical machine according to any of the preceding claims, wherein the immersion sleeve (IS) is made of a polymeric material.

8. The electrical machine according to any of the preceding claims, wherein the immersion sleeve (IS) is glued into the opening of the machine housing (MH).

9. The electrical machine (EM) according to any of the preceding claims, wherein the electrical machine is an electrical generator (EG), the generator being capable of producing an electric power of at least 1 MW, such as 2 MW, such as 3 MW, such as 4 MW, such as 5 MW, such as 10 MW, or more.

10. A wind turbine (WT) comprising an electrical generator (EG) according to claim 1.

11. A method for mounting a temperature sensor (TS) into an electric machine (EM) according to any one of claims 1-9, said temperature sensor (ST) for monitoring of a stator winding (SW) temperature from outside a machine housing (MH) around the stator (ST), the method comprising:
- providing a temperature sensor (P_TS) with a sensor-end and a wire-end,
- providing an opening (P_OP) of the machine housing from an external surface of the housing and into one of the cooling slots (CS),
- inserting an immersion sleeve (I_IS) into the opening of the electrical machine housing, into the cooling slot of the stator windings,
- mounting a bushing (M_BU) on an external surface of the electrical machine housing aligned with the opening of the electrical machine housing, and
- inserting the temperature sensor (I_TS) from outside the machine housing into the immersion sleeve via the bushing with an insertion angle of the temperature sensor through the machine housing (MH) perpendicular to or approximately perpendicular to the axis of rotation of the rotor (RO), so that the sensor-end is positioned in the cooling slot.

## Patentansprüche

1. Elektrische Maschine (EM), umfassend;
- einen Stator (ST) mit Stapeln von Lamellenblechen und eine Statorwicklungsanordnung, die Statorwicklungen (SW) mit Kühlschlitzen (CS) in den Stapeln von Lamellenblechen umfasst,
- einen Rotor (RO), der zur Drehung innerhalb des Stators angeordnet ist,
- ein Maschinengehäuse (MH) zum Aufnehmen des Stators,
- mindestens eine Temperatursensoranordnung, umfassend:
- einen Temperatursensor (TS) mit einem Sensorende (SE) und einem Drahtende (WE) und
- eine Tauchhülse (IS),
wobei ein Einsetzungswinkel der Temperatursensoranordnung durch das Maschinengehäuse (MH) senkrecht zu oder annähernd senkrecht zu einer Drehachse des Rotors (RO) ist und
wobei das Sensorende des Temperatursensors in die Tauchhülse und durch eine in einer Öffnung im Maschinengehäuse angeordnete Einsetzungsbohrung (IB) eingesetzt wird, so dass das Sensorende des Temperatursensors innerhalb eines der Kühlschlitze positioniert ist, um so das Erfassen einer Temperatur oder Messen einer Temperatur der Statorwicklungen durch elektrische Verbindung mit dem Drahtende des Temperatursensors zu ermöglichen, und
**dadurch gekennzeichnet, dass** der Stator radiale Kühlschlitze (RCS) zwischen den Stapeln von Lamellenblechen aufweist und wobei der Temperatursensor eine Länge aufweist, wobei das Sensorende in einem unteren Teil eines dieser Kühlschlitze, der dem radialen Zentrum der Maschine am nächsten liegt, positioniert ist, während das Drahtende außerhalb des Maschinengehäuses positioniert ist,
wobei das radiale Ende des Kühlschlitzes, der dem Zentrum der Maschine am nächsten liegt, durch ein geeignetes Material (BL) blockiert ist, um so zu verhindern, dass das Sensorende durch Kühlflüssigkeit gekühlt wird, wenn es im unteren Teil des Kühlschlitzes positioniert ist.

2. Elektrische Maschine (EM) nach Anspruch 1, umfassend einen externen Anschlussüberwachungskasten (MB), der am Drahtende (WE) des Temperatursensors (TS) angeschlossen werden kann, um so eine elektrische Kommunikation zwischen dem Temperatursensor und dem externen Überwachungskasten zu ermöglichen und um so die Überwachung der Temperatur innerhalb der Statorwicklungen (SW) von außerhalb des Maschinengehäuses (MH) zu ermöglichen.

3. Elektrische Maschine (EM) nach Anspruch 1 und 2, wobei die mindestens eine Temperatursensoranordnung (TS) angeordnet ist, damit der Temperatursensor von außerhalb des Maschinengehäuses (MH) auszutauschen ist.

4. Elektrische Maschine (EM) nach einem der vorstehenden Ansprüche, umfassend eine Vielzahl von Temperatursensoranordnungen, die in entsprechende Öffnungen des Maschinengehäuses (MH) eingesetzt sind.

5. Elektrische Maschine (EM) nach einem der vorstehenden Ansprüche, wobei eine Vielzahl von Temperatursensoren (TS) oder jeweiligen Temperatursensoranordnungen mit einem einzigen externen Anschlussüberwachungskasten (MB) verbunden ist.

6. Elektrische Maschine (EM) nach einem der vorstehenden Ansprüche, wobei der mindestens eine Temperatursensor (TS) ein Temperatursensor vom Widerstandstyp ist.

7. Elektrische Maschine nach einem der vorstehenden Ansprüche, wobei die Tauchhülse (IS) aus einem polymeren Material hergestellt ist.

8. Elektrische Maschine nach einem der vorstehenden Ansprüche, wobei die Tauchhülse (IS) in die Öffnung des Maschinengehäuses (MH) eingeklebt ist.

9. Elektrische Maschine (EM) nach einem der vorstehenden Ansprüche, wobei die elektrische Maschine ein elektrischer Generator (EG) ist, wobei der Generator in der Lage ist, eine elektrische Leistung von mindestens 1 MW, beispielsweise 2 MW, beispielsweise 3 MW, beispielsweise 4 MW, beispielsweise 5 MW, beispielsweise 10 MW oder mehr zu erzeugen.

10. Windkraftanlage (WT), die einen elektrischen Generator (EG) nach Anspruch 1 umfasst.

11. Verfahren zum Einbauen eines Temperatursensors (TS) in eine elektrische Maschine (EM) nach einem der Ansprüche 1-9, wobei der Temperatursensor (ST) zum Überwachen einer Statorwicklungstemperatur (SW) von außerhalb eines Maschinengehäuses (MH) um den Stator (ST) herum dient, wobei das Verfahren Folgendes umfasst:
- Bereitstellen eines Temperatursensors (P_TS) mit einem Sensorende und einem Drahtende,
- Bereitstellen einer Öffnung (P_OP) des Maschinengehäuses von einer Außenfläche des Gehäuses aus und in einen der Kühlschlitze (CS),
- Einsetzen einer Tauchhülse (I_IS) in die Öffnung des Elektromaschinengehäuses, in den Kühlschlitz der Statorwicklungen,
- Montieren einer Buchse (M_BU) auf einer Außenfläche des Elektromaschinengehäuses, die mit der Öffnung des Elektromaschinengehäuses ausgerichtet ist, und
- Einsetzen des Temperatursensors (I_TS) von außerhalb des Maschinengehäuses über die Buchse in die Tauchhülse, mit einem Einsetzungswinkel des Temperatursensors durch das Maschinengehäuse (MH), senkrecht oder annähernd senkrecht zur Drehachse des Rotors (RO), sodass das Sensorende im Kühlschlitz positioniert ist.

## Revendications

1. Machine électrique (EM) comprenant ;
- un stator (ST) avec des empilements de feuilles de stratification et un agencement d'enroulements de stator comprenant des enroulements de stator (SW) avec des fentes de refroidissement (CS) dans les empilements de feuilles de stratification,
- un rotor (RO) conçu pour tourner à l'intérieur du stator,
- un carter de machine (MH) pour loger le stator,
- au moins un agencement de capteur de température comprenant :
- un capteur de température (TS) avec une extrémité capteur (SE) et une extrémité fil (WE), et
- un manchon d'immersion (IS),
dans laquelle un angle d'insertion de l'agencement de capteur de température à travers le carter de machine (MH) est perpendiculaire ou approximativement perpendiculaire à un axe de rotation du rotor (RO), et
dans laquelle l'extrémité capteur du capteur de température est insérée dans le manchon d'immersion et à travers un alésage d'insertion (IB) agencé dans une ouverture du carter de machine, de sorte que l'extrémité capteur du capteur de température soit positionnée dans l'une des fentes de refroidissement, permettant ainsi la détection d'une température ou la mesure de température des enroulements de stator par connexion électrique à l'extrémité fil du capteur de température, et
**caractérisée en ce que** le stator présente des fentes de refroidissement radiales (RCS) entre les empilements de feuilles de stratification, et dans laquelle le capteur de température présente une longueur, l'extrémité capteur étant positionnée au niveau d'une partie inférieure de l'une de ces fentes de refroidissement la plus proche du centre radial de la machine, en même temps que l'extrémité fil est positionnée à l'extérieur du carter de machine,
dans laquelle l'extrémité radiale de la fente de refroidissement la plus proche du centre de la machine est bloquée par un matériau approprié (BL), afin d'empêcher le refroidissement de l'extrémité capteur par le fluide de refroidissement, lorsqu'elle est positionnée dans la partie inférieure de la fente de refroidissement.

2. Machine électrique (EM) selon la revendication 1, comprenant une boîte à bornes de surveillance externe (MB) connectable à l'extrémité fil (WE) du capteur de température (TS), afin de permettre une communication électrique entre le capteur de température et la boîtie de surveillance externe, et afin de permettre la surveillance de la température à l'intérieur des enroulements de stator (SW) depuis l'extérieur du carter de machine (MH).

3. Machine électrique (EM) selon les revendications 1 et 2, dans laquelle le au moins un agencement de capteur de température (TS) est conçu pour que le capteur de température soit remplacé depuis l'extérieur du carter de machine (MH).

4. Machine électrique (EM) selon l'une quelconque des revendications précédentes, comprenant une pluralité d'agencements de capteurs de température insérés dans les ouvertures respectives du carter de machine (MH).

5. Machine électrique (EM) selon l'une quelconque des revendications précédentes, dans laquelle une pluralité de capteurs de température (TS) ou d'agencements de capteurs de température respectifs sont connectés à une seule boîte à bornes de surveillance externe (MB).

6. Machine électrique (EM) selon l'une quelconque des précédentes, dans laquelle le au moins un capteur de température (TS) est un capteur de type détecteur de température à résistance.

7. Machine électrique selon l'une quelconque des revendications précédentes, dans laquelle le manchon d'immersion (IS) est fabriqué en matériau polymère.

8. Machine électrique selon l'une quelconque des revendications précédentes, dans laquelle le manchon d'immersion (IS) est collé dans l'ouverture du carter de machine (MH).

9. Machine électrique (EM) selon l'une quelconque des revendications précédentes, dans laquelle la machine électrique est un générateur électrique (EG), le générateur étant apte à produire une puissance électrique d'au moins 1 MW, par exemple 2 MW, par exemple 3 MW, par exemple 4 MW, par exemple 5 MW, par exemple 10 MW, ou plus.

10. Éolienne (WT) comprenant un générateur électrique (EG) selon la revendication 1.

11. Procédé de montage d'un capteur de température (TS) dans une machine électrique (EM) selon l'une quelconque des revendications 1-9, ledit capteur de température (ST) servant à surveiller une température d'enroulements de stator (SW) depuis l'extérieur d'un carter de machine (MH) entourant le stator (ST), le procédé comprenant :
- la fourniture d'un capteur de température (P_TS) doté d'une extrémité capteur et d'une extrémité fil,
- la fourniture d'une ouverture (P_OP) du carter de machine depuis une surface externe du boîtier et dans l'une des fentes de refroidissement (CS),
- l'insertion d'un manchon d'immersion (I_IS) dans l'ouverture du carter de machine électrique, dans la fente de refroidissement des enroulements de stator,
- le montage d'une bague (M_BU) sur une surface extérieure du carter de machine électrique, alignée sur l'ouverture du carter de machine électrique, et
- l'insertion du capteur de température (I_TS) depuis l'extérieur du carter de machine, dans le manchon d'immersion par l'intermédiaire de la bague, selon un angle d'insertion du capteur de température à travers le carter de machine (MH) perpendiculaire ou approximativement perpendiculaire à l'axe de rotation du rotor (RO), de sorte que l'extrémité capteur soit positionnée dans la fente de refroidissement.
